# EUROPEAN PATENT APPLICATION

(11) **EP 3 560 648 A1**
(43) Date of publication of application: **30.10.2019**
(21) Application number: 19170097.0
(22) Date of filing: 18.04.2019
(51) Int. Cl.: B23H 5/00, B23H 9/10, B23H 9/14, B23K 26/402, B23K 26/382, B23H 1/00

(54) **MICRO MACHINING**

(30) Priority: 27.04.2018 GB 201806939
(71) Applicant: Tek 4 Limited, Leicester, Leicestershire LE2 5LQ (GB)
(72) Inventor: Duffin, Jason, Leicester, Leicestershire LE2 5LQ (GB)
(74) Representative: Range, Christopher William

(57) **Abstract**

A method of micro machining a workpiece; a micro machining apparatus and a micro machined workpiece. The method includes the steps of laser cutting a test bore in a test piece using a laser beam; measuring the test bore using either a measurement probe or an electrode; correlating the electrode to the laser beam; laser ablating the surface the workpiece in a first region; and electrical discharge machining the workpiece in the first region to produce at least one bore in the workpiece. The workpiece has a surface coating and at least one bore, wherein the bore passes through the surface coating with a diameter that is within 0.3 mm of the diameter of the bore in the remainder of the workpiece.

## Description

### TECHNICAL FIELD

The present disclosure relates to a method of micro machining a workpiece. Aspects of the invention relate to method of micro machining a workpiece, a micro machining apparatus and micro machined workpiece.

### BACKGROUND

It is known to use electrical discharge machining (EDM) to micro machine bores in workpieces such as gas turbine components. These bores are used to channel relatively cool air through the component to increase the maximum operating temperature of the component.

It is also known to coat such gas turbine components with a heat resistant coating, so as to further increase the maximum operating temperature of the component. However, the heat resistant coating is typically non-conductive of electricity, and therefore EDM cannot be used.

Instead, laser machining may be used to penetrate the heat resistant coating and expose the surface of the gas turbine component. The gas turbine component is then moved to a second machine which performs the EDM to produce the bores.

US 5418345 discloses a method for forming shaped passages using two separate machines for forming the passages. US 2005/0173388 discloses a method of producing a composite component.

However various problems can occur when implementing such a method to combination drill a workpiece. Calibration of the laser produced bores with the EMD machines is extremely difficult. This is exacerbated by the complex nature of the surfaces of the gas turbine components and the potential variability between components throughout manufacture, for example through casting thickness variation.

The present invention aims to solve one or more of the above problems.

### SUMMARY OF THE INVENTION

Aspects and embodiments of the invention provide a method of micro machining a workpiece, a micro machining apparatus and a micro machined workpiece as claimed in the appended claims.

According to an aspect of the invention, there is provided a method of micro machining a workpiece, the method comprising the steps of: laser cutting a test bore in a test piece using a laser beam; measuring the test bore using either a measurement probe or an electrode; correlating the electrode to the laser beam; laser ablating the surface the workpiece in a first region; and electrical discharge machining the workpiece in the first region to produce at least one bore in the workpiece, wherein the laser ablating step and the electrical discharge machining steps are carried out in the same micro machining apparatus.

By correlating the electrode to the laser beam, a high degree of accuracy may be achieved when combination drilling a workpiece.

The workpiece may have a surface coating, and the step of laser ablating the surface of the workpiece in the first region may comprise laser ablating the surface coating to expose a conductive portion of the workpiece.

The test bore may be measured using the measurement probe. This establishes the axis of the best bore. Measuring is achieved by contacting or probing the test bore walls with the measurement probe.

Alternatively, the test bore may be measured using the electrode. This establishes the axis of the test bore.

Measuring the test bore may comprise taking at least three measurements. Measuring the test bore may comprise taking four or more measurements.

The test bore may be cut with a diameter of 5 to 15 mm, preferably wherein the test bore may be cut with a diameter of approximately 10 mm.

The method may further comprise the step of laser ablating the surface the workpiece in a plurality of regions; and electrical discharge machining the workpiece in the plurality of regions to produce a plurality of bores in the workpiece.

A plurality of workpieces may be laser ablated and electrically discharge machined following correlation of the electrode to the laser beam.

According to another aspect of the invention, there is provided a micro machining apparatus comprising: an electrical discharge machine (EDM) head including an electrode, a laser beam, a measurement probe, a component mounting assembly and a processor, wherein the EDM head and laser beam are configured for movement relative to the component mounting assembly, and wherein the laser beam is configured to cut a test bore in a test piece, and wherein the measurement probe or electrode are configured to measure the position of the test bore, wherein the processor is configured to correlate the electrode to the laser beam using the position of the test bore.

The micro machining apparatus is a single apparatus arranged to perform laser cutting, measuring, laser ablation and electrical discharge machining.

The measurement probe may be configured to measure the position of the test bore.

The electrode may be configured to measure the position of the test bore.

According to another aspect of the invention, there is provided a micro machined workpiece, wherein the workpiece has a surface coating and at least one bore, wherein the at least one bore passes through the surface coating with a diameter that is within 0.3 mm of the diameter of the at least one bore in the remainder of the workpiece.

The accuracy of machining provides a workpiece with improved aerodynamic efficiency. Furthermore, the corrosion resistance of the workpiece is improved, as the minimum amount thermal coating is removed in order to expose the channel. Computer numerical control of the discharge parameters, and accurate sensing devices which locate the workpiece prior to machining provide the means to fully automate machining cycles.

The at least one bore may pass through the surface coating with a diameter that is within 0.15 mm of the diameter of the at least one bore in the remainder of the workpiece.

According to another aspect of the invention, there is provided a micro machined workpiece, wherein the workpiece has a surface coating and at least one bore, wherein the at least one bore passes through the surface coating with a diameter that is less that the diameter of the at least one bore in the remainder of the workpiece.

The surface coating may be non-conductive.

The surface coating may be ceramic.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:

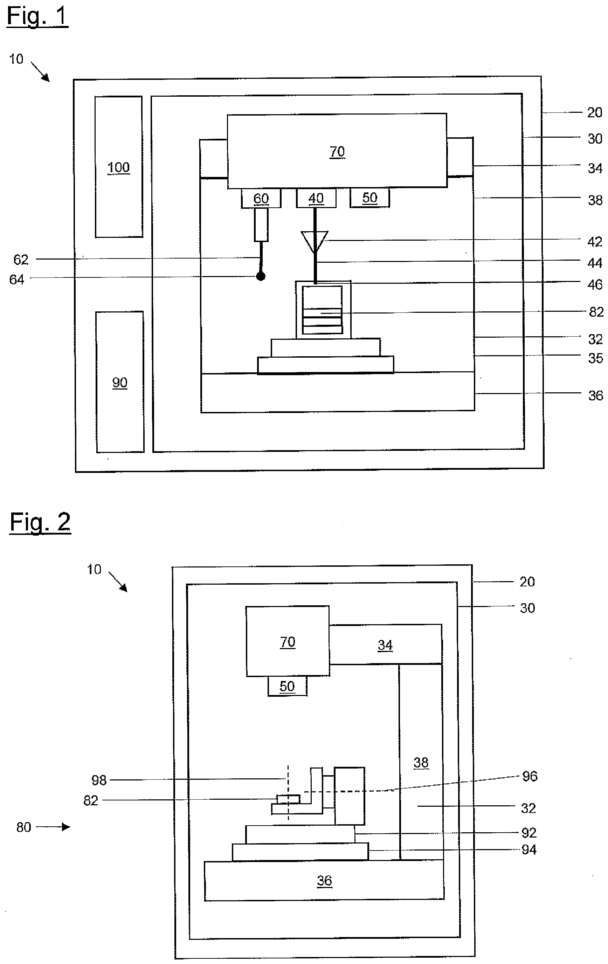

Figure 1 is a schematic front elevation of the micro machining apparatus in accordance with a first embodiment of the present invention;
Figure 2 is a side elevation of the micro machining apparatus of Figure 1;
Figure 3 is an enlarged schematic front elevation of the table top of the micro machining apparatus of Figure 1;
Figure 4 is a process flow diagram showing the steps for calibrating the laser to the electrode; and
Figure 5 is alternate process flow diagram showing the steps for calibrating the laser to the electrode.

### DETAILED DESCRIPTION

A micromachining apparatus 10 has a housing 20 defining a work area 30 having C-frame 32. The C-frame 32 has a gantry 34 at an upper flange and a support base 36 at a lower flange. The upper flange and lower flange are connected by vertical web 38.

Within the work area an electrical discharge machine (EDM) head 40, a laser beam 50, a measurement probe 60, and a component mounting assembly 80 are provided. The micromachining apparatus 10 further includes various motors, gears and drives, generally termed drive mechanisms 90, and a control system including a processor 100. The drive mechanisms 90 are responsible for manipulating the EDM head 40, laser beam 50, measurement probe 60 and component mounting assembly 80 as will be described in greater detail below.

The EDM head 40 comprises an electrode guide 42 and an electrode 44. The electrode 44 is an elongate copper tube having a tip 46. In use, the electrode 44 delivers an electric discharge via the tip 46 to a workpiece 12. In use, the electrode tip 46 is gradually worn away.

The laser beam 50 includes laser, beam deflection and focus assemblies. The laser beam 50 is capable of performing laser ablation of the heat resistant coating of the gas turbine component.

The measurement probe 60 is a co-ordinate measuring machines (CMM) probe having a cylindrical shaft 62 terminating in a spherical stylus 64.

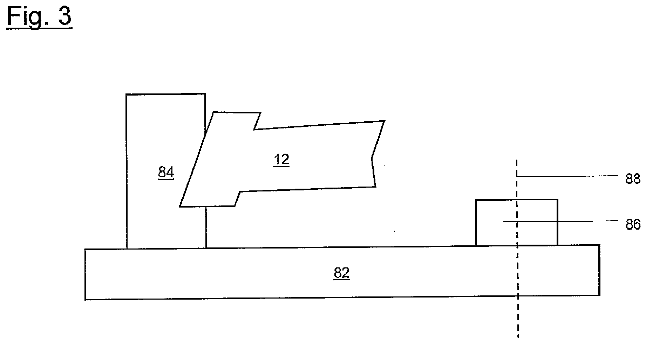

Referring to Figure 3, the component mounting assembly 80 comprises a table top 82, a fixture 84 and a calibration bore 86. The fixture 84 and calibration bore 86 are provided on a surface of the table top 82. The fixture 84 is used to grip either the workpiece 12, or a test piece 14. The test piece 14 is a machinable material. The workpiece may be a turbine blade for a jet engine. The workpiece may have a thermal surface coating. The surface coating may be non conductive. The thermal surface coating may be a ceramic. The calibration bore 86 is a cylindrical annulus with a flat upper surface and a bore diameter of approximately 0.5mm. The calibration bore 86 has bore axis 88.

### Orientation

Orientation of the component within the machine is defined by three orthogonal translational axes and up to three angular axes. The orthogonal translational axes are (x, y, z) and equate to left-right (x), fore-aft (y) and up-down (z). The angular axes are (a, b, c), where a equates to rotation about the x-axis; b equates to rotation about the y-axis; and c equates to rotation about the z-axis.

The micromachining apparatus has five degrees of freedom. In an alternate embodiment, the micromachining apparatus has more than five degrees of freedom.

The EDM head 40, laser beam 50, and measurement probe 60 are mounted to gantry 34 via vertical column 70. Thus the EDM head 40, laser beam 50, and measurement probe 60 are mounted in fixed relation to one another along the x and y axes. In an alternate embodiment, the EDM head 40, laser beam 50, and measurement probe 60 may be additionally moveable relative to one another along the x and y axes.

The vertical column 70 provides movement along the z-axis for the EDM head 40, laser beam 50, and measurement probe 60. Movement of the vertical column 70 along the vertical axis is driven by servomotors. The laser beam is mounted on a vertical column - providing variation along the z-axis. This allows positional control of the focal point of the laser beam. The typical focal length of the laser beam is approximately 200mm to 250mm.

The component mounting assembly 80 includes two slide assemblies 92, 94 to position the table top 82 in the correct x,y position. Slide assembly 92 controls the x position of the table top 82 and slide assembly 94 controls the y position. The slide assemblies 92, 94 and driven by servomotors.

The component mounting assembly 80 further includes two rotary axes 96, 98 for positioning the table top 82 in the correct attitude. The rotary axes 96, 98 allow angular variation in b and c respectively. The rotary axes 96, 98 are driven by rotary drives.

### Operation

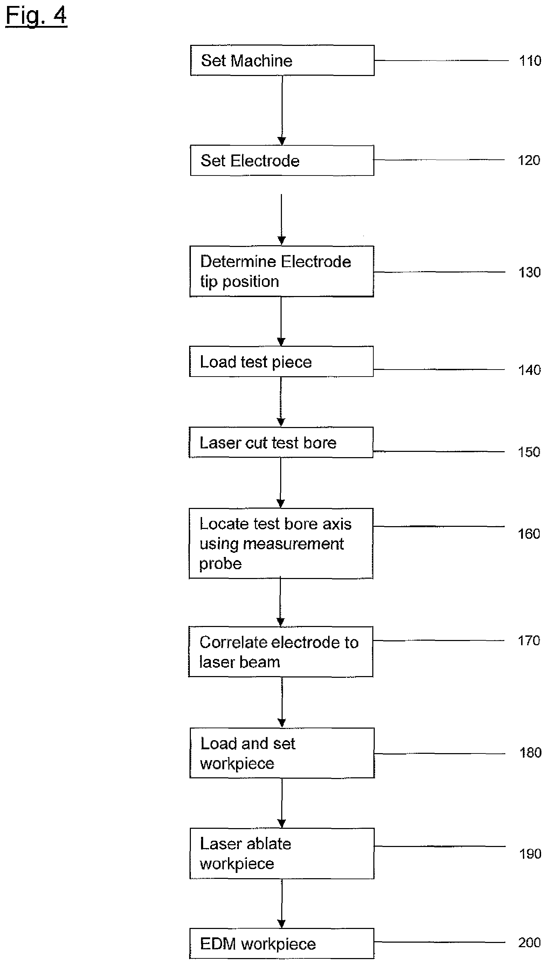

The micro machining apparatus 10 is calibrated as follows, (referring to Figure 4):
Step 110 - Set machine 10. Before commencement of a production cycle, the micro machining apparatus 10 is set by probing the table top 82 and calibration bore 86 using the measurement probe 60. This qualifies the five axes of the micro machining apparatus 10.
Step 120 - Set electrode 74. The electrode 74 is set by probing the calibration bore 86 using the electrode 74. The electrode 74 contact senses the calibration bore 86 as is known in the art.
Step 130 - Determine electrode tip 76 position. The processor within control system 100 determines the position of the electrode 74 relative to the measurement probe 60, and more specifically, where the tip 76 of the electrode 74 is within the micro machining apparatus 10.
Step 140 - Load test piece 14. The micro machining apparatus is loaded with a test piece 14. The test piece 14 is held by fixture 84 on the table top 82.

The test piece 14 comprises a 1mm thick plate. The test piece 14 is made of a machinable material, for example mild steel.

Step 150 - Laser cut test bore 16. To achieve a high degree of accuracy in a combined laser machined and EDM bore, the laser beam 50 is first used to machine a test bore 16 in the test piece 14. The test bore 16 has a diameter of between 2 and 15mm. The test bore 16 preferably has a diameter of 5mm. The test bore 16 may pass completely through the test piece 14, alternatively the test bore 16 may be a blind bore.

Step 160 - Locate bore axis. The measurement probe 60 is used to locate the central axis of test bore 16. The measurement probe 60 does this by measuring at least three points on the bore wall of the test bore 16.

Step 170 - Correlate electrode 74 to laser beam 50. The processor within control system 100 is used to correlate the electrode 74 to the laser beam 50.

Step 180 - Load and set workpiece 12. The test piece 14 is removed and replaced by a workpiece 12. The workpiece 12 is held by fixture 84 on the table top 82. The workpiece 12 is set by probing the workpiece 12 using the measurement probe 60.

Step 190 - Laser ablate workpiece 12. The laser beam 50 is used to laser ablate a region of the workpiece 12. The laser beam 50 may be used to laser ablate a plurality of regions of the workpiece 12.

Step 200 - EDM machine workpiece 12. The electrode 74 is used to EDM machine the region of the workpiece 12. The electrode 74 may be used to EDM machine the plurality of regions of the workpiece 12.

Thus the laser ablation and EDM machining are performed on the same micro machining apparatus.

The method results in a high degree of accuracy between the laser cut bore and the EDM machined bore. The laser cut bore may pass through the surface coating with a diameter that is within 0.3 mm of the diameter of the bore in the remainder of the workpiece 12. The laser cut bore may pass through the surface coating with a diameter that is within 0.15 mm of the diameter of the bore in the remainder of the workpiece 12. In some embodiments, an undercut may be produced, where the laser cut bore passes through the surface coating with a diameter that is less that the diameter of the bore in the remainder of the workpiece 12.

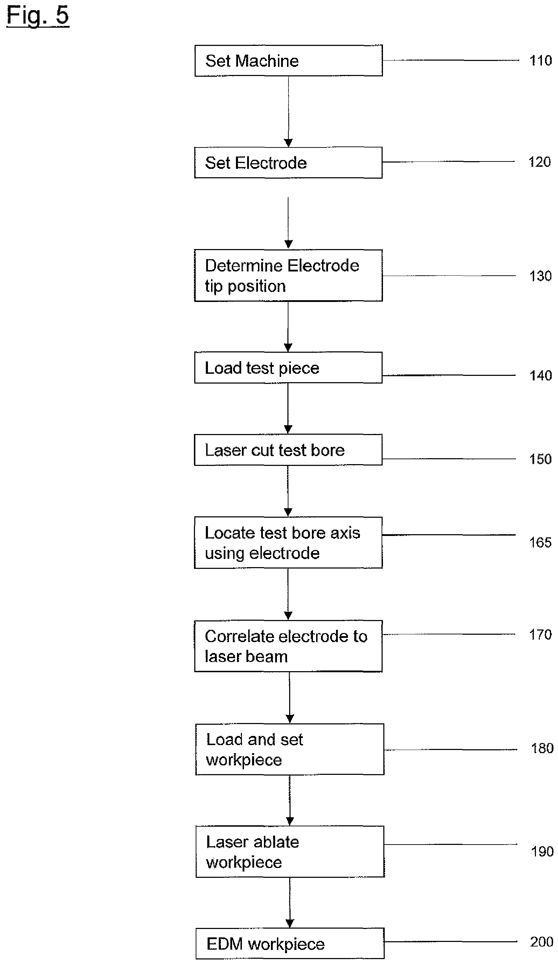

In an alternate method, Step 160 may be carried out using the electrode 74 rather than the measurement probe 60. This is shown in Figure 5 as step 165. The electrode 74 of the EDM head 40 is used to probe the test bore 16 and thereby correlate the electrode 74 to the laser beam 50. The electrode 74 similarly measures at least three points on the bore wall of the test bore 16.

Quick change work piece holders are used to reduce part changeover times.

A number of single electrodes are stored at fixed locations around the work area and may be picked up by the EDM head 40 as necessary.

According to the shape of the workpiece 12; and the desired position of the bores, it may be more procedurally efficient to undertake step 190 in a plurality of regions, then subsequently undertake step 200 in the plurality of regions. Alternatively, for example if the position of the bores are on opposite sides of the workpiece 12, it may be more procedurally efficient to undertake steps 190 and 200 in sequence, for each region of the workpiece 12 which requires a bore.

## Claims

1. A method of micro machining a workpiece, the method comprising the steps of:
laser cutting a test bore in a test piece using a laser beam;
measuring the test bore using either a measurement probe or an electrode;
correlating the electrode to the laser beam;
laser ablating the surface the workpiece in a first region; and
electrical discharge machining the workpiece in the first region to produce at least one bore in the workpiece, wherein the laser ablating step and electrical discharge machining steps are carried out in the same micro machining apparatus.

2. A method of micro machining a workpiece according to claim 1, wherein the workpiece has a surface coating, and the step of laser ablating the surface of the workpiece in the first region comprises laser ablating the surface coating to expose a conductive portion of the workpiece.

3. A method of micro machining a workpiece according to claim 1 or claim 2, wherein the test bore is measured using the measurement probe.

4. A method of micro machining a workpiece according to claim 1 or claim 2, wherein the test bore is measured using the electrode.

5. A method of micro machining a workpiece according to any preceding claim, wherein measuring the test bore comprises taking at least three measurements, preferably wherein measuring the test bore comprises taking four or more measurements.

6. A method of micro machining a workpiece according to any preceding claim, wherein the test bore is cut with a diameter of 5 to 15 mm, preferably wherein the test bore is cut with a diameter of approximately 10 mm.

7. A method of micro machining a workpiece according to any preceding claim, further comprising the step of laser ablating the surface the workpiece in a plurality of regions; and electrical discharge machining the workpiece in the plurality of regions to produce a plurality of bores in the workpiece.

8. A method of micro machining a workpiece according to any preceding claim, wherein a plurality of workpieces are laser ablated and electrically discharge machined following correlation of the electrode to the laser beam.

9. A micro machining apparatus comprising: an electrical discharge machine (EDM) head including an electrode, a laser beam, a measurement probe, a component mounting assembly and a processor, wherein the EDM head and laser beam are configured for movement relative to the component mounting assembly, and wherein the laser beam is configured to cut a test bore in a test piece, and wherein the measurement probe or electrode are configured to measure the position of the test bore, wherein the processor is configured to correlate the electrode to the laser beam using the position of the test bore.

10. A micro machining apparatus according to claim 9, wherein the measurement probe is configured to measure the position of the test bore.

11. A micro machining apparatus according to claim 9, wherein the electrode is configured to measure the position of the test bore.

12. A micro machined workpiece, wherein the workpiece has a surface coating and at least one bore, wherein the at least one bore passes through the surface coating with a diameter that is within 0.3 mm of the diameter of the at least one bore in the remainder of the workpiece.

13. A micro machined workpiece according to claim 12, wherein the at least one bore passes through the surface coating with a diameter that is within 0.15 mm of the diameter of the at least one bore in the remainder of the workpiece.

14. A micro machined workpiece, wherein the workpiece has a surface coating and at least one bore, wherein the at least one bore passes through the surface coating with a diameter that is less that the diameter of the at least one bore in the remainder of the workpiece.

15. A micro machined workpiece according to any of claims 12 to 14, wherein the surface coating is non-conductive, preferably wherein the surface coating is ceramic.
